# EUROPÄISCHE PATENTSCHRIFT

(11) **EP 2 051 919 B1**
(45) Veröffentlichungstag und Bekanntmachung des Hinweises auf die Patenterteilung: **17.03.2010**
(21) Anmeldenummer: 07801694.6
(22) Anmeldetag: 16.08.2007
(51) Int. Cl.: B65G 47/90

(54) **VORRICHTUNG ZUM BEARBEITEN UND/ODER HANDLING VON GEGENSTÄNDEN**
DEVICE FOR TREATING AND/OR HANDLING ARTICLES
DISPOSITIF POUR TRAITER ET/OU MANIPULER DES OBJETS

(30) Priorität: 16.08.2006 DE 102006038505
(43) Veröffentlichungstag der Anmeldung: 29.04.2009
(73) Patentinhaber: KMB Produktions AG, 8552 Felben (CH)
(72) Erfinder: KNOBEL, Guido, 8532 Warth (CH)
(74) Vertreter: Weiss, Peter
(86) Internationale Anmeldenummer: PCT/EP2007/007238
(87) Internationale Veröffentlichungsnummer: WO 2008/019850

(56) Entgegenhaltungen:
- WO-A-99/08832
- WO-A-99/32256
- DE-A1- 19 654 041
- US-B1- 6 428 267
- US-B1- 6 557 235

## Beschreibung

Die vorliegende Erfindung betrifft eine Vorrichtung zum Bearbeiten und/oder Handling von Gegenständen, insbesondere von Formen beim Herstellen von Schokoladenartikel, mittels einem Greifer, der an zumindest drei Armen angeordnet ist, welche jeweils an zwei äusseren Schlitten und einem inneren Schlitten entlang zumindest einer Schiene bewegbar sind, wobei ein äusserer Arm an dem äusseren Schlitten einen inneren Arm an dem inneren Schlitten kreuzt.

### Stand der Technik

Vorrichtungen der o.g. Art sind bekannt und in vielfacher Form und Ausführung auf dem Markt. In der Regel werden sie als Roboter bezeichnet und dienen dazu, in einem automatisierten Betrieb Gegenstände beliebiger Art von einem Ort zu einem anderen gewünschten Ort zu versetzen. Nur bspw. wird auf die DE 299 20 995 U1 verwiesen in der eine Vorrichtung zum Manipulieren von Leiterplatten gezeigt ist. Dabei, befindet sich in einem Grundgehäuse ein Handlinggerät mit Saugelementen an einer Platte, wobei das Handlinggerät Leiterplatten aus einer Kassette mit einer schrägen Stellwand entnimmt oder in einer entsprechenden Kassette abstapelt. Das Handlinggerät besitzt einen Hydraulikzylinder, aus dem eine Kolbenstange ausfahrten kann, an der die Platte mit den Saugelementen angeordnet ist. Dieser Zylinder dreht um eine Achse, die Entnahme und Einlegetätigkeit wird durch das Ausfahren der Kolbenstange bewirkt.

Ähnliches ist auch in der DE 296 22 286 U1 gezeigt, wo in einer Vorrichtung Leiterplatten und Klebeschichten (Prepreg) zusammengeführt werden. Dies geschieht durch entsprechende Saugplatten an Schlitten, die an Schienen geführt werden.

Das US Patent 6,557,235 B1 beschreibt einen Linearroboter, der für Bearbeitungs- oder Handlingsaufgaben eingesetzt wird. Die Vorrichtung besteht aus einem Maschinengestell, einer mobilen Plattform und zwei Linearführungen. Ober die Verbindungselemente ist die mobile Plattform mit den Linearführungen verbunden, wobei zwei Verbindungselemente mit demselben Gelenk mit der Plattform verbunden sind. An der mobilen Plattform können Greifer oder Werkzeuge befestigt werden.

Aus der WO 99/08832 A1 ist ferner eine Vorrichtung zum Bewegen und Positionieren eines Gegenstandes in einer Ebene bekannt. In einem Ausführungsbeispiel ist der Gegenstand über drei Arme mit jeweils einem Schlitten verbunden. Dabei bilden die Arme von zwei benachbarten Schlitten ein gemeinsames oder auch jeder für sich ein benachbartes Gelenk an dem Gegenstand aus. In einem weiteren Ausführungsbeispiel der Erfindung ist dann vorgesehen, dass ein innerer Arm einen äusseren Arm kreuzt, wobei die beiden äusseren Arme ein gemeinsames Gelenk an dem Werkzeug ausbilden.

Ähnliches ist auch in der WO 99/32256 A1 gezeigt, wobei dort allerdings ein äusserer Arm den inneren Arm kreuzt.

Die vorliegende Erfindung bezieht sich vor allem auf das Versetzen von Gegenständen im Lebensmitteibereich und hier bei der Herstellung von Konfiserieartikein, wie bspw. Pralinen od. dgl.. Diese Confiserieartikel werden üblicherweise in Mhrfachformhergestellt, die dann zum Aushärten In eine weitere Bearbeitungsstation bewegt werden. Bis heute wird dies durch handelsüblich Roboter, die mit Hydraulik oder Pneumatik arbeiten durchgeführt. Diese begegnen Insbesondere hygienischen Bedenken. Ferner lässt die Geschwindigkeit von derartigen Hydraulikrobotem sehr zu wünschen übrig und auch die Genauigkeit, mit der bspw. Mehrfachformen den entsprechenden Austragsdüsen zugeordnet werden müssen, kann mit Hydraulik- oder Pneumatikrobotern nur schwer erreicht werden.

### Aufgabe

Aufgabe der vorliegenden Erfindung ist es, eine kostengünstige, einfach herzustellende aber äusserst präzise arbeitende Vorrichtung der o.g. Art zu entwickeln.

### Lösung der Aufgabe

Zur Lösung der Aufgabe führt, dass der den inneren Arm kreuzende äussere Arm ein gemeinsames Gelenk mit dem anderen äusseren Arm an den Greifer ausbildet oder auch den weiteren äusseren Arm kreuzt und jenseits des Gelenks ein eigenes Gelenk mit dem Greifer ausbildet.

Diese Anordnung gibt der Führung des Greifers eine erhebliche Stabilität, so dass die Präzision der Führung wesentlich verbessert wird. Ferner wird dadurch ermöglicht, dass der Greifer nicht nur angehoben oder abgesenkt sondern auch geschwenkt werden kann. Damit kann der Greifer sehr vielseitig eingesetzt werden.

Sowohl bei dem ersten wie auch bei dem zweiten Ausführungsbeispiel kann es sich als ratsam erweisen, dass zwei Arme ein Parallelogramm bilden, d.h., auf der selben Seite versetzt zum Greifer angeordnet sind, Der dritte Arm auf der anderen Seite des Greifers kreuzt das Parallelogramm oder zumindest einen Arm davon. Hierdurch wird die Breite der gesamten Vorrichtung so gering wie möglich gehalten.

Bei einem anderen Ausführungsbeispiel der Erfindung wird dagegen von den Armen kein Parallelogramm gebildet, sondern die Arme sind beliebig an einer oder mehreren Schienen verfahrbar. Hierdurch kann mit dem Greifer jede beliebige Bewegung üm ein Gelenk durchgeführt werden, bspw. auch eine 360° Drehung.

Bei einem weiteren Ausführungsbeispiel sind zwei Arme verkürzt ausgebildet, wobei ein kürzerer Armabschnitt zu einem Parallelogramm mit einem längeren Arm gehört. Die beiden kurzen Armabschnitte sind an ihren freien Ende mit einem Mittelgelenk verbunden, an das auch zwei festliegenden mit dem Greifer verbundene Armstreifen anschliessen. Auch mit einer derartigen gelenkigen Armanordnung können bestimmte Bewegungen des Greifers durchgeführt werden.

Die eben erwähnten Ausführungsbeispiele lassen sich beliebig fortsetzen. Weitere Ausführungsbeispiele liegen im Rahmen der Erfindung.

Des weiteren ist auch denkbar, dass auf den Greifer ein Aufsatz mit schräg zur Greiferoberfläche angestellten Übernahmeflächen aufgesetzt wird, wodurch ebenfalls besondere Anforderungen der Greiferbewegung Rechnung getragen werden kann.

Um auch eine dreidimensionale Bewegung des Greifers im Raum zu ermöglichen, kann der oben erwähnten Schiene noch eine weitere Schiene zugeordnet werden, wobei sich bevorzugt zwischen der ersten Schiene und der zweiten Schiene ebenfalls ein Linearantrieb befindet. Die zweite Schiene sollte bezüglich zu der ersten Schiene schräg oder sogar im rechten Winkel dazu verlaufen.

Des weiteren ist vorgesehen, dass zwischen Schlitten und Schiene ein Linearantrieb angeordnet ist.

Unter einem Linearantrieb oder Linearmotor wird eine elektrische Antriebsmaschine verstanden. Im Gegensatz zu den verbreiteten rotierenden Maschinen versetzt ein Linearmotor die mit ihm verbundenen Objekte nicht in eine drehende, sondern in eine geradlinige Bewegung (Translationsbewegung). Eine Möglichkeit zur Konstruktion eines Linearmotors besteht in der Abwicklung eines rotierenden Schrittmotors in die Ebene. Bspw. ist ein derartiger Linearmotor in der DE 10 2005 047 819 A1 gezeigt, auf die Bezug genommen wird, so dass eine weitere Beschreibung des Linearmotors hier unterbleibt.

Für den vorliegenden Fall bedeutet dies, dass zwischen der Schiene und dem Schlitten der Linearantrieb angeordnet ist. Bspw. können auf der Schiene entsprechende Permanentmagnetstreifen als Teil eines Stators angeordnet sein, wobei diese Permanentmagnetstreifen bezüglich ihrer Polung abwechseln. Durch einen Luftspalt ist der bewegbare Teil des Linearmotors davon getrennt, wobei dieser bewegbare Teil die entsprechenden Wicklungen aufweist, die erregt werden können, damit der Linearantrieb in Tätigkeit versetzt wird. Selbstverständlich kann diese Anordnung auch umgedreht sein.

Linearmotoren haben erhebliche Vorteile. Zum einen arbeiten sie getriebelos, was ihre Handhabung und ihren Einsatz wesentlich begünstigt. Sie arbeiten verschleissfrei, so dass sie vor allem auch in Reinräumen eingesetzt werden können. Ein weiterer Vorteil liegt darin, dass sie einer ausserordentlich hohen Beschleunigung ausgesetzt werden können und dennoch äusserst präzise eine vorgegebene Position oder angefahrene Position einhalten.

Gerade wegen der enormen Beschleunigung, wodurch natürlich Arbeitsverfahren wesentlich beschleunigt werden, müssen die weiteren Transportorgane, die mit dem Schlitten verbunden sind, so ausgelegt sein, dass die zu versetzenden Gegenstände, deren Gewicht bei der enormen Beschleunigung relativ gesehen sehr stark zunimmt, auch gehalten werden können. Hierzu ist vorgesehen, dass mit dem Greifer ein weiterer Arm verbunden ist, der an einem weiteren Schlitten entlang einer Schiene bewegbar ist. Obwohl für dieses Merkmal und die nachfolgenden Merkmale auch unabhängig von dem Linearmotor Schutz begehrt wird, ist der Erfindungsgedanke vor allem bei dem Einsatz eines Linearmotors oder zweier Linearmotoren bei zwei Schlitten wünschenswert. Auf diese Weise hängt der Greifer nicht nur an einem Arm und wäre hier Pendelbewegungen ausgesetzt, sondern er stützt sich an einem zweiten Arm ab, wobei die beiden Arme und die Schiene bevorzugt dreiecksförmig zueinander angeordnet sind. In diesem Fall müssen nur die Arme entsprechend ausgelegt werden, dass sie Druck und Zug Stand halten.

In einem bevorzugten Ausführungsbeispiel der Erfindung ist vorgesehen, zwischen Greifer und Schlitten einen Kraftspeicher anzuordnen. Hierbei kann es sich um eine entsprechende hydraulische, pneumatische, elektrisch oder mechanische Einrichtung, wie beispielsweise eine Schraubenfeder, handeln. Dieser Kraftspeicher ist insbesondere notwendig, wenn ein oben beschriebener Linearmotor Anwendung findet. Fällt bei der Maschine der Strom aus, so besteht die Gefahr, dass der Greifer nach unten saust. Dies wird durch den Kraftspeicher verhindert, so dass dieser Kraftspeicher einen Notstopp ausbildet.

Die vorliegende Erfindung bietet sich für viele Zwecke als Roboter oder zum Bearbeiten von Werkstücken an. Gedacht ist vor allem an ihre Verwendung bei der Herstellung von Schokoladenartikein. Hier dient die Vorrichtung nicht nur dem Versetzen von beispielsweise Formen, in denen Schokoladenartikel ausgeformt werden, wie dies beispielsweise in der EP 0 981 280 A1 beschrieben ist. Zum Versetzen der entsprechenden Form wird die erfindungsegmässe Vorrichtung in der Regel an einer Decke angeordnet und arbeitet vertikal.

Die Vorrichtung könnte aber auch beispielsweise zum Weitertransport der Form ähnlich der DE 298 20 564 U oder auch zum Abstreifen der Form von einer überschüssigen Schokoladenmasse verwendet werden. In diesem Fall sind an dem Greifer entsprechende Werkzeuge vorgesehen. Beispielsweise kann es sich um ein Schabwerkzeug handeln, welches mittels dem Greifer schräg von oben auf die Form abgesenkt wird und nach dem Befüllen der einzelnen Formnester und der Abkühlung die über die Formnester hervorstehende Schokoladenmasse abstreifen kann. Entsprechende Sensoren bestimmen dann Geschwindigkeit und Druck dieses Bearbeitungsvorganges, wofür sich insbesondere wiederum der oben erwähnte Linearantrieb eignet.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figuren 1a bis 1f Seitenansichten eines Ausführungsbeispiels einer erfindungsgemässen Vorrichtung zum Versetzen von Gegenständen in verschiedenen Gebrauchslagen;
Figuren 2a bis 2f Seitenansichten eines weiteren Ausführungsbeispiels einer efindungsgemässen Vorrichtung zum Versetzen von Gegenständen in verschiedenen Gebrauchslagen;
Figuren 3a bis 3f Seitenansichten eines weiteren Ausführungsbeispiels einer erfindungsgemässen Vorrichtung zum Versetzen von Gegenständen in verschiedenen Gebrauchslagen;
Figuren 4a bis 4f Seitenansichten eines weiteren Ausführungsbeispiels einer erfindungsgemässen Vorrichtung zum Versetzen von Gegenstände in unterschiedlichen Gebrauchslagen;
Figuren 5 bis 7 Seitenansichten von weiteren Ausführungsbeispielen einer erfindungsgemässen Vorrichtung zum Versetzen von Gegenständen;
Figur 8 eine perspektivische Ansicht einer erfindungsgemässen Vorrichtung zum Handling von Gegenständen;
Figur 9 eine Frontansicht eines weiteren Ausführungsbeispiel einer erfindungsgemässen Vorrichtung zum Versetzen von Gegenständen.

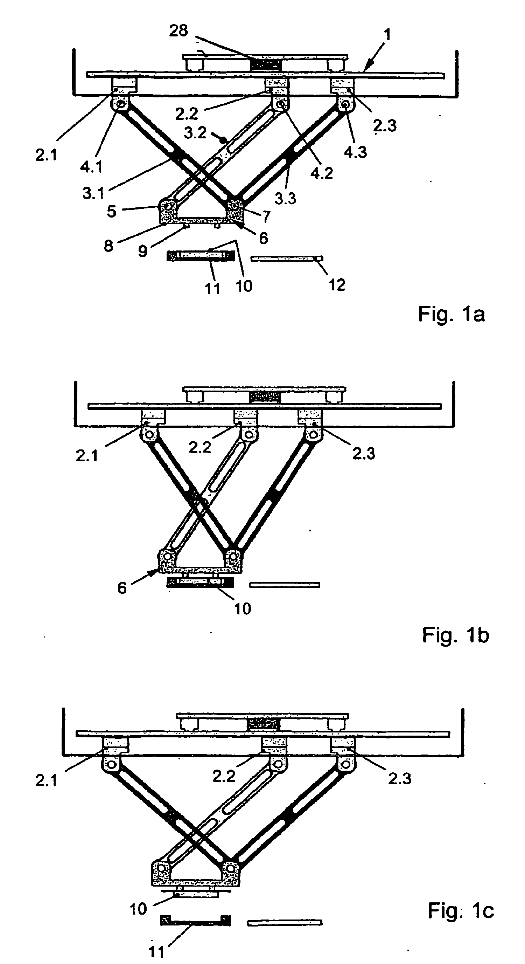

Gemäss den Figuren 1a bis 1f sind an einer Schiene 1 drei Schlitten 2.1 bis 2.3 angeordnet, die entlang dieser Schiene 1 bewegbar sind. Mit jedem Schlitten 2.1 bis 2.3 ist ein Arm 3.1 bis 3.3 über ein Gelenk 4.1 bis 4.3 verbunden. Der Arm 3.2 ist an seinem freien Ende über ein weiteres Gelenk 5 mit einem Greifer 6 verbunden, während die beiden anderen Arme 3.1 und 3.3 ein gemeinsames Gelenk 7 an dem Greifer 6 aufweisen. Auf einer Greiferoberfläche 8 befinden sich Greiforgane 9, wie bspw. Saugnäpfe, die einen zu versetzenden Gegenstand 10 halten können. Dieser Gegenstand 10 befindet sich in einem Behälter 11 und soll auf eine Tragfläche 12, wie bspw. ein Transportband versetzt werden.

Die Funktionsweise der vorliegenden Erfindung ist folgende:

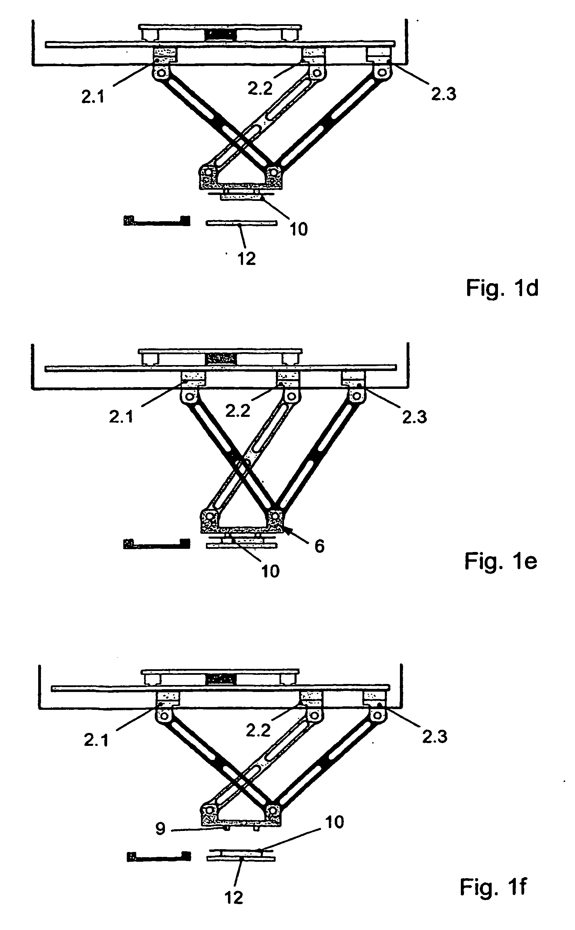

Gemäss Figur 1a wird der Greifer 6 durch ein entsprechendes Bewegen der Schlitten 2.1 bis 2.3 über dem Behälter 11 angeordnet. Zum exakt vertikalen Absenken des Greifers 6 auf den Gegenstand 10 gemäss Figur 1b werden alle drei Schlitten 2.1 bis 2.3 um den gleichen Fahrweg verfahren, wobei die Schlitten 2.2 und 2.3 sich folgen und beide auf den Schlitten 2.1 zulaufen. Zum exakt vertikalen Anheben des Gegenstandes 10 aus dem Behälter 11 werden die drei Schlitten 2.1 bis 2.3 um den gleichen Fahrweg wieder zurück verfahren, so dass sie sich, wie in Figur 1 gezeigt, in der Ausgangslage gemäss Figur 1a befinden.

Nunmehr werden die drei Schlitten 2.1 bis 2.3, wie in Figur 1d gezeigt, um den gleichen Weg nach rechts verfahren, bis sich der Gegenstand 10 über der Tragfläche 12 befindet. Danach werden wieder alle drei Schlitten 2.1 bis 2.3 um den gleichen Weg verfahren und zwar die Schlitten 2.2 und 2.3 aufeinanderfolgend und der Schlitten 2.1 auf die Schlitten 2.2 und 2.3 zu. Hierdurch erfolgt ein Absenken des Greifers 6 mit dem Gegenstand 10 auf die Tragfläche 12.

Die Greiforgane 9 werden nun gelöst und, wie in Figur 1f gezeigt, die Schlitten 2.1 bis 2.3 in die in Figur 1d gezeigte Ausgangslage zurückverfahren, wobei der Gegenstand 10 auf der Tragfläche 12 verbleibt.

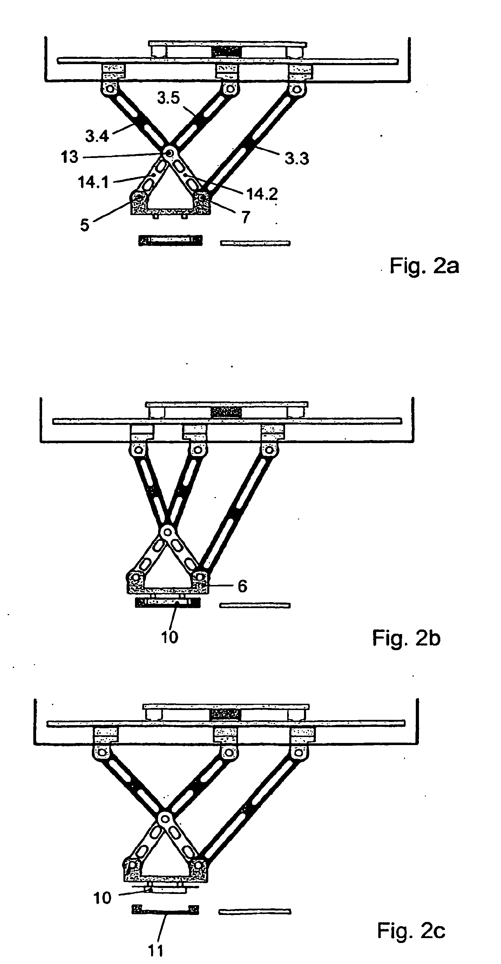

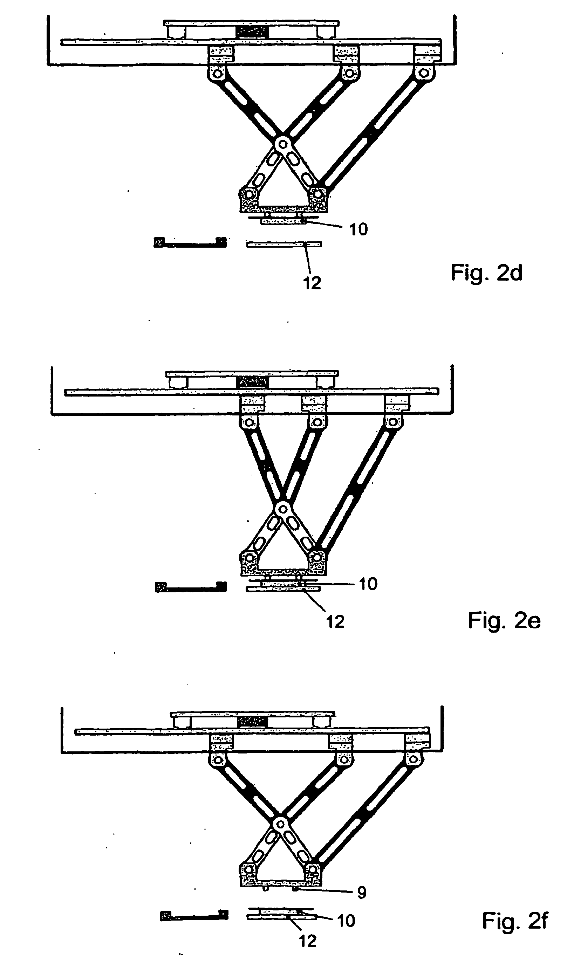

Das Ausführungsbeispiel einer erfindungsgemässen Vorrichtung zum Versetzen von Gegenständen gemäss den Figuren 2a bis 2f unterscheidet sich von demjenigen nach Figur 1a bis 1f dadurch, dass zwei Arme 3.4 und 3.5 verkürzt ausgebildet sind und beide über ein Mittelgelenk 13 mit zwei Armstreifen 14.1 und 14.2 gekoppelt sind, die über die Gelenke 5 und 7 mit dem Greifer verbunden sind. Mit dieser Ausführungsform kann zum einen der gleiche Bewegungsablauf durchgeführt werden, wie zu den Figuren 1a bis 1f beschrieben. Gemäss Figur 2b erfolgt eine Absenken des Greifers 6 zu dem Gegenstand 10, gemäss Figur 2c ein Anheben des Gegenstandes 10 aus dem Behälter 11, gemäss Figur 2d ein Überführen des Gegenstandes 10 zu einer Position oberhalb der Tragfläche 12, gemäss Figur 2e, ein Absenken des Gegenstandes 10 auf die Tragfläche 12 und gemäss Figur 2f ein Lösen der Greiforgane 9 von dem Gegenstand 10, der auf der Tragfläche 12 verbleibt.

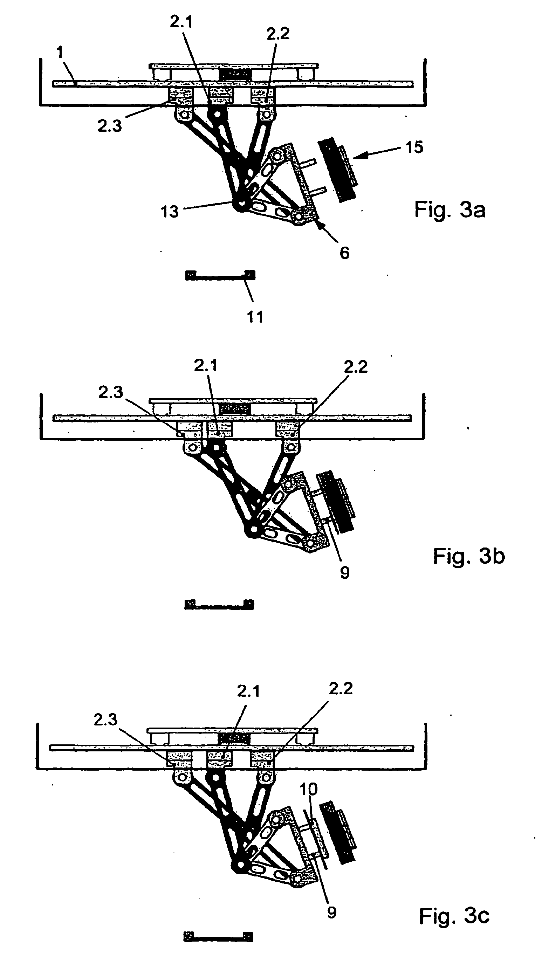

Während mit dem Ausführungsbeispiel der erfindungsgemässen Vorrichtung zum Versetzen von Gegenständen gemäss den Figuren 1a bis 1f zwar durch ein unterschiedliches Verfahren der Schlitten 2.1 bis 12.3 ein gewisses Kippen des Greifers 6 möglich ist, kann der Greifer nach dem Ausführungsbeispiel gemäss den Figuren 2a bis 2f, wie in den Figuren 3a bis 3f gezeigt, um das Mittelgelenk 13 geschwenkt werden. Hierzu ist es allerdings ratsam, jedoch nicht notwendig, zumindest einen Schlitten 2.3 an einer separaten Schiene anzuordnen, die, nicht näher gekennzeichnet, sich hinter der Schiene 1 befindet.

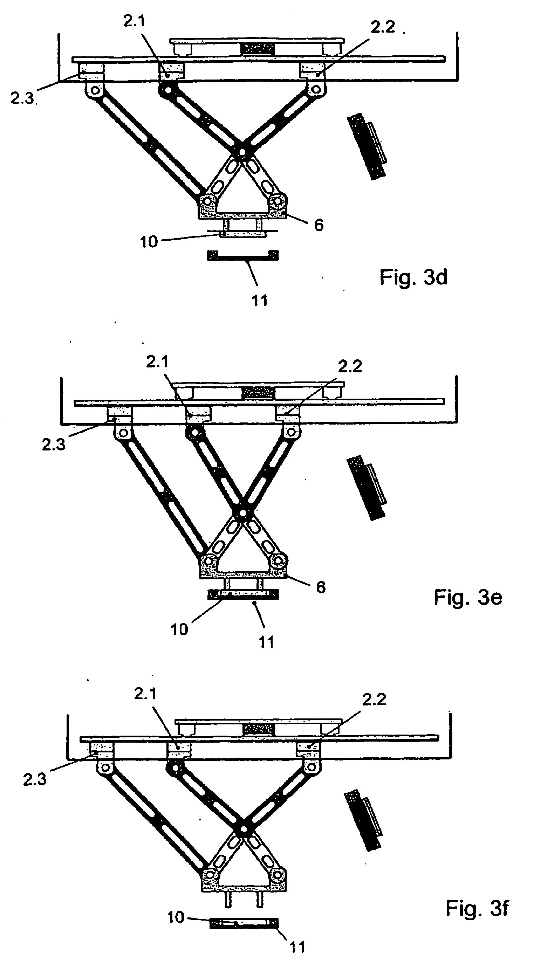

Gemäss Figur 3a liegen die Schlitten 2.1 - 2.3 relativ eng beieinander. Dabei ist der Greifer 6 um über 90° verschwenkt, so dass er einen Gegenstand 10 aus einem Stapel 15, der schräg zu dem Behälter 11 angeordnet ist, entnehmen kann. Zu diesem Zweck werden die zwei Schlitten 2.1 und 2.2 etwas auseinander gefahren und alle drei Schlitten auf den Stapel 15 zu bewegt, wobei diese Bewegung kontinuierlich verläuft, so dass ein schräges Anfahren des Stapels 15 geschieht. Hierdurch können die Greiforgane 9 den Gegenstand 10 auch schräg angreifen, wie dies in Figur 3b gezeigt ist. Nunmehr erfolgt ein Zurückfahren der Schlitten 2.1 bis 2.3 in die in Figur 3a gezeigte Ausgangslage, wobei gemäss Figur 3c die Greiforgane 9 den Gegenstand 10 halten. Danach erfolgt ein Auseinanderfahren der Schlitten 2.1 bis 2.3, wodurch der Greifer 6 in die in Figur 3d gezeigte Lage geschwenkt wird, in der sich der Gegenstand 10 über dem Behälter 11 befindet.

Gemäss Figur 3e werden nun wieder die beiden Schlitten 2.1 aufeinander zu bewegt, während der Schlitten 2.3 dem Schlitten 2.1 folgt. Hierdurch erfolgt ein exakt vertikales Absenken des Greifers 6, so dass der Gegenstand 10 in den Behälter 11 übergeben werden kann. Danach werden die Schlitten 2.1 bis 2.3 wieder in die in Figur 3d gezeigte Ausgangslage zurück verfahren, wobei jedoch, wie in Figur 3f gezeigt, der Gegenstand 10 in dem Behälter 11 verbleibt.

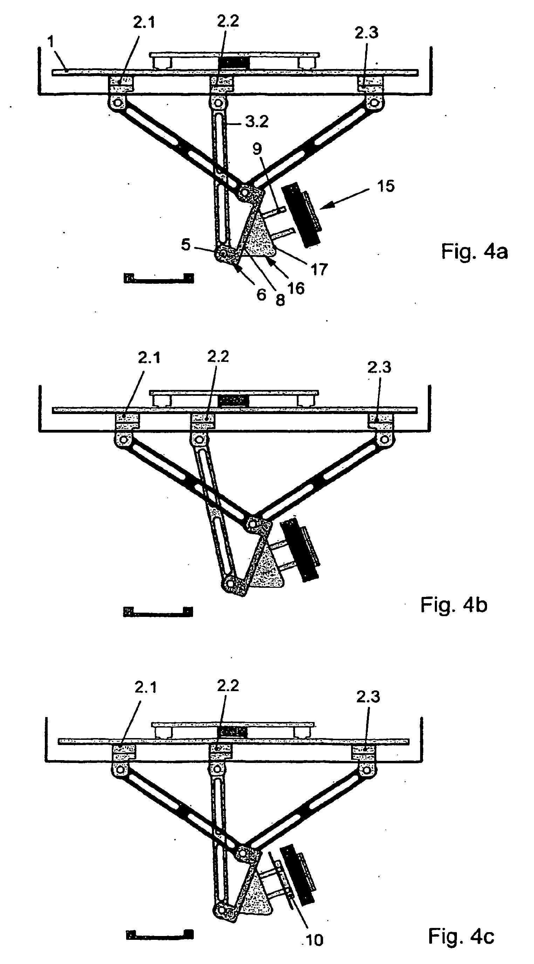

Während bei dem Ausführungsbeispiel gemäss den Figuren 1a bis 1f die Schlitten 2.1. bis 2.3 an der gleichen Schiene 1 angeordnet sein können, müssen sie, wenn ein Schwenken des Greifers über ein grösseres Schwenkmass hinaus gewünscht wird, an unterschiedlichen Schienen angeordnet sein, wobei eine zweite Schiene hinter der ersten Schiene liegen kann. In dem Ausführungsbeispiel gemäss den Figuren 4a bis 4f befinden sich die Schlitten 2.1 und 2.3 an der selben Schiene 1, während für den Schlitten 2.2 eine eigene Schiene vorgesehen ist. Bei dieser Anordnung könnte sogar der Greifer 6 um 360° um das Gelenk 5 herum geschwenkt werden.

In dem Ausführungsbeispiel ist aber vor allem auch ein Aufsatz 16 auf der Greiferoberfläche 8 gezeigt, wobei die Greiforgane 9 sich auf einer schräg angestellten Übernahmefläche 17 befinden. Ein derartiger Aufsatz 16 ermöglicht auch das Entnehmen eines Gegenstandes 10 aus einem Stapel 15, wenn dieser Stapel 15 in einem sonst von dem Greifer 6 nicht zu erreichenden Position liegt. Dies ist vor allem in Figur 4a erkennbar, in welcher der Arm 3.2 fast senkrecht steht und die Schlitten 2.1 und 2.3 weitestgehend auseinander gefahren sind. Selbst wenn jetzt beide Schlitten 2.1 und 2.3 nach links verfahren würden und damit ein weiteres Schwenken des Greifers 6 um das Gelenk 5 erfolgen würde, wären die dann in eine Übernahmeposition gedrehten Greiforgane 9 zu hoch angeordnet, als dass sie den Stapel 15 anfahren könnten. Dies wird durch den Aufsatz 16 ausgeglichen. Durch ein entsprechendes Steuern der Fahrwege der Schlitten 2.1 bis 2.3 gemäss den Figuren 4b und 4c erfolgt ein Anfahren der Greiforgane 9 an den Gegenstand 10 und ein Entnehmen des Gegenstandes 10.

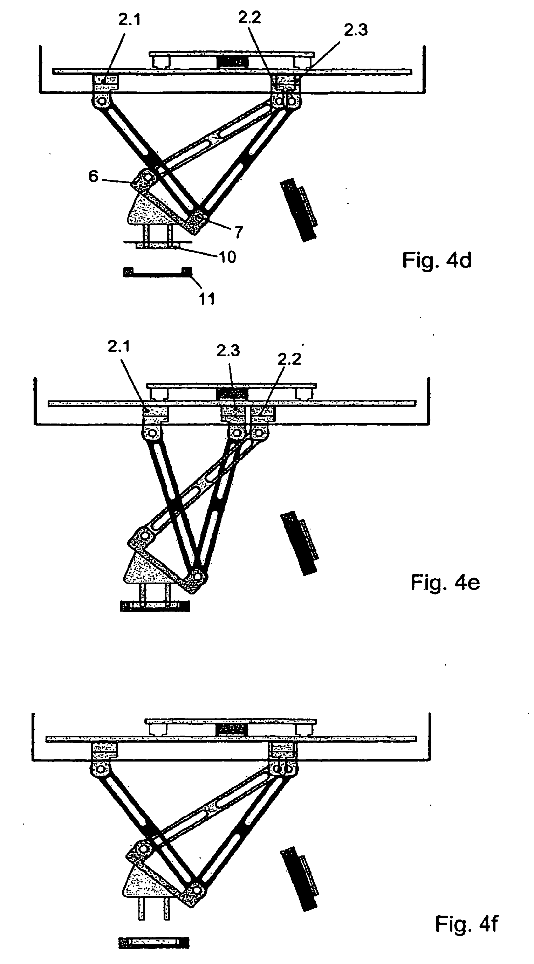

Um nun jedoch den Gegenstand 10 etwa waagerecht über den Behälter 11 zu verbringen, bedarf es eines entgegengesetzen Schwenkens des Greifers 6 um das Gelenk 7. Dies wird vor allem dadurch bewirkt, dass der Schlitten 2.2 gemäss den Figuren 4d und 4e an dem Schlitten 2.3 vorbei fährt. Die Gebrauchslage gemäss Figur 4f entspricht derjenigen nach Figur 4d.

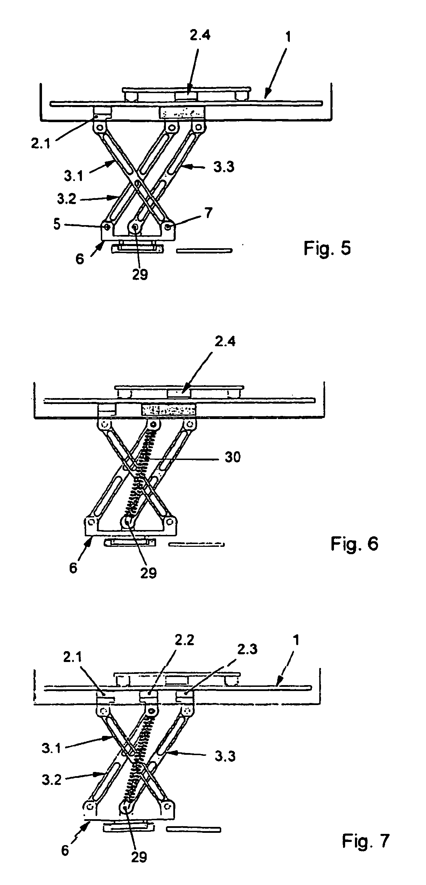

Gemäss Figur 5 ist der Greifer 6 über die beiden Arme 3.2 und 3.3 parallelogrammartig mit einem gemeinsamen Schlitten 2.4 verbunden, während für den Arm 3.1 nur der eine Schlitten 2.1 vorgesehen ist. Dafür besitzt aber der Arm 3.1 auch keinen gemeinsamen Anlenkpunkt am Greifer 6 mit einem der Arme 3.2 oder 3.3, sondern der Arm 3.3 weist ein eigenes Gelenk 29 mit dem Greifer 6 auf. Dieses Gelenk 29 befindet sich zwischen den Gelenken 5 und 7. Denkbar ist auch, jedoch hier nicht gezeigt, dass der Arm 3.1 mit dem Gelenk 29 und der Arm 3.3 mit dem Gelenk 7 verbunden ist. In diesem Fall wird allerdings die Baugrösse der gesamten Vorrichtung erhöht.

Durch die parallelogrammartige Verbindung des Greifers 6 mit nur einem Schlitten 2.4 und dem Vorsehen eines eigenen Gelenks 29 wird zwar die Führung des Greifers 6 stabilisiert, allerdings ist nur ein Anheben und Absenken möglich und kein Schwenken des Greifers 6.

Das Ausführungsbeispiel gemäss Figur 6 unterscheidet sich von demjenigen nach Figur 5 dadurch, dass der Greifer 6 zusätzlich über einen Kraftspeicher 30 mit dem Schlitten 2.4 verbunden ist. Im vorliegenden Ausführungsbeispiel ist der Kraftspeicher 30 als Schraubenfeder ausgebildet und mit dem Gelenk 29 verbunden. Dieser Kraftspeicher 30 gewährleistet, dass bei einem möglichen Stromausfall der Greifer 6 nicht nach unten fällt, sondern in seiner durch den Kraftspeicher 30 vorgegebenen Lage festgehalten wird.

Das Ausführungsbeispiel gemäss Figur 7 unterscheidet sich von demjenigen nach Figur 6 dadurch, dass anstelle des einen Schlittens jeder Arm 3.1 bis 3.3 wieder seinen eigenen Schlitten 2.1 bis 2.3 an der Schiene 1 besitzt. Hierdurch ist die Möglichkeit des Schwenkens des Greifers 6 um beispielsweise das Gelenk 29 herum gegeben.

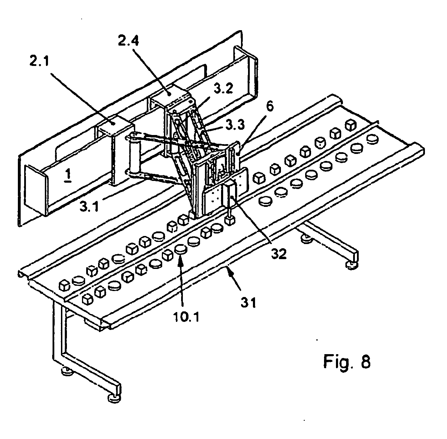

In Figur 8 wird angedeutet, dass die erfindungsgemässe Vorrichtung nicht nur zum Versetzen von Gegenständen, sondern auch zu deren Handling oder Bearbeitung geeignet ist. In diesem Fall befinden sich die Gegenstände 10.1 auf einem Tisch 31. Ferner wird angedeutet, dass die gesamte Vorrichtung nicht nur an einer Decke angeordnet werden kann und in der Vertikalen arbeitet, sondern beispielsweise könnte sie auch an einer nicht näher gezeigten Wand vorgesehen werden, so dass die Arme 3.1 bis 3.3 sich an den Schlitten 2.1 und 2.4 in der Waagrechten bewegen. An dem entsprechenden Greifer 6, der hier als Montageplatte ausgebildet ist, befindet sich dann ein entsprechendes Werkzeug 32.

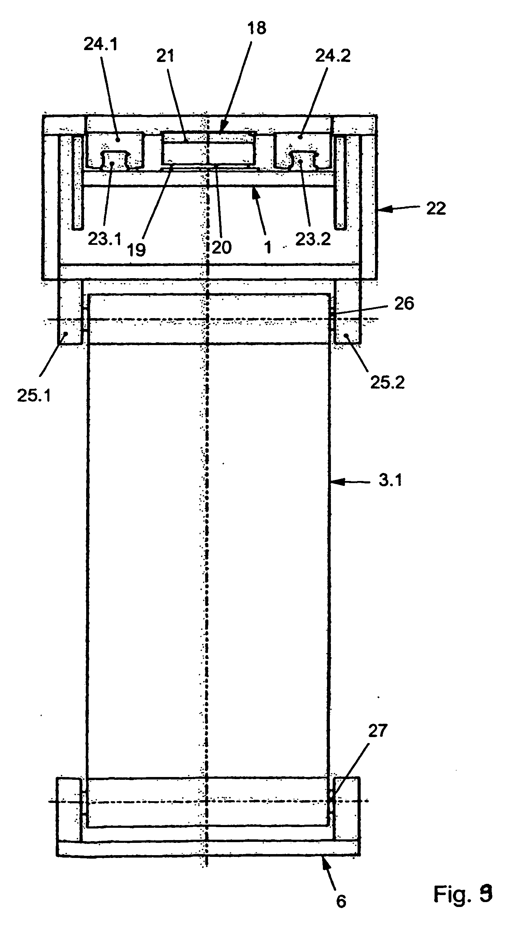

Gemäss der vorliegenden Erfindung soll die Bewegung der Schlitten mit Hilfe von Linearantrieben erfolgen. Ein derartiger Antrieb ist schematisch in Figur 9 dargestellt. In diesem Ausführungsbeispiel ist der Linearantrieb 18 auf der Schiene 1 angeordnet, wobei die Schiene 1 querschnittlich die Form eines liegenden I aufweist. Von dem Linearantrieb 18 sind Permanentmagnetstreifen 19 angedeutet, die in einer entsprechenden Polausrichtung hintereinander auf der Oberfläche der Schiene 1 aufgereiht liegen.

Über diesen Permanentmagnetstreifen 19 und getrennt durch einen Luftspalt 20 befindet sich eine Reihe von Wicklungen 21, die erregt werden können. Hierdurch kann ein kastenförmiges Schlittengehäuse 22 entlang der Schiene 1 linear bewegt werden, wobei dieses kastenförmige Schlittengehäuse 22 die Schiene 1 umfängt. Es stützt sich beidseits des Linearantriebes 18 gegen Führungsschienen 23.1 und 23.2 ab, die von entsprechenden Laufschienen 24.1 und 24.2 übergriffen sind.

Unten an dem Schlittengehäuse 22 sind zwei Haltelaschen 25.1 und 25.2 vorgesehen, die von einem Gelenkbolzen 26, der das Gelenk 4.1 bildet, durchdrungen sind. An diesem Gelenkbolzen 26 hängt der Arm 3.1, an dessen freiem Ende sich ein weiterer Gelenkbolzen 27 befindet, der das Gelenk 7 bildet. An diesem ist der Greifer 6 gelenkig befestigt.

### Bezugszeichenliste

| | | | | | |
|---|---|---|---|---|---|
| 1 | Schiene | 34 | | 67 | |
| 2 | Schlitten | 35 | | 68 | |
| 3 | Arm | 36 | | 69 | |
| 4 | Gelenk | 37 | | 70 | |
| 5 | Gelenk | 38 | | 71 | |
| 6 | Greifer | 39 | | 72 | |
| 7 | gemeinsames Gelenk | 40 | | 73 | |
| 8 | Greiferoberfläche | 41 | | 74 | |
| 9 | Greiforgan | 42 | | 75 | |
| 10 | Gegenstand | 43 | | 76 | |
| 11 | Behälter | 44 | | 77 | |
| 12 | Tragfläche | 45 | | 78 | |
| 13 | Mittelgelenk | 46 | | 79 | |
| 14 | Armstreifen | 47 | | | |
| 15 | Stapel | 48 | | | |
| 16 | Aufsatz | 49 | | | |
| 17 | Übernahmefläche | 50 | | | |
| 18 | Linearantrieb | 51 | | | |
| 19 | Permanentmagnetstreifen | 52 | | | |
| 20 | Luftspalt | 53 | | | |
| 21 | Wicklungen | 54 | | | |
| 22 | Schlittengehäuse | 55 | | | |
| 23 | Führungsschiene | 56 | | | |
| 24 | Laufschiene | 57 | | | |
| 25 | Laschen | 58 | | | |
| 26 | Gelenkbolzen | 59 | | | |
| 27 | Gelenkbolzen | 60 | | | |
| 28 | zweiter Linearantrieb | 61 | | | |
| 29 | Gelenk | 62 | | | |
| 30 | Kraftspeicher | 63 | | | |
| 31 | Tisch | 64 | | | |
| 32 | Werkzeug | 65 | | | |
| 33 | | 66 | | | |

## Patentansprüche

1. Vorrichtung zum Bearbeiten und/oder Handling von Gegenständen (10), insbesondere von Formen beim Herstellen von Schokoladenartikel, mittels einem Greifer (6), der an zumindest drei Armen (3.1 - 3.5) angeordnet ist, welche jeweils an zwei äusseren Schlitten (2.1, 2.3) und einem inneren Schlitten (2.2) entlang zumindest einer Schiene (1) bewegbar sind, wobei ein äusserer Arm (3.1) an dem äusseren Schlitten (2.1) einen inneren Arm (3.2) an dem inneren Schlitten (2.2) kreuzt,
**dadurch gekennzeichnet,**
**dass** der den inneren Arm (3.2) kreuzende äussere Arm (3.1) ein gemeinsames Gelenk (7) mit dem anderen äusseren Arm (3.3) an dem Greifer (6) ausbildet oder auch den weiteren äusseren Arm (3.3) kreuzt, der jenseits des Gelenks (7) ein eigenes Gelenk (29) mit dem Greifer (8) ausbildet.

2. Vorrichtung nach Anspruch 1; **dadurch gekennzeichnet, dass** der innere und ein äusserer Arm (3.2, 3.3) ein Parallelogramm bilden und der äussere Arm (3.1) dieses Parallelogramm kreuzt.

3. Vorrichtung nach Anspruch 1 oder 2. **dadurch gekennzeichnet, dass** zumindest ein äusserer und der innere Arm (3.4, 3.5) eine gelenkige Verbindung (13) zwischen Schlitten (2.1, 2.2) und Greifer (6) miteinander eingeben.

4. Vorrichtung nach Anspruch 3, **dadurch gekennzeichnet, dass** beide Arme (3.4. 3.5) über ein Mittelgelenk (113) mit zwei Armstreifen (14.1, 14.2) verbunden sind, die anderenends getrennt an dem Greifer (6) angekoppelt sind.

5. Vorrichtung nach wenigstens einem der Ansprüche 1 - 4, **dadurch gekennzeichnet, dass** zumindest zwei Schlitten (2.1 - 2:3) entlang der gleichen Schiene (1) bewegbar sind.

6. Vorrichtung nach wenigstens einem der Ansprüche 1 - 5, **dadurch gekennzeichnet, dass** sich an dem Greifer (6) ein Aufsatz (16) mit einer schräg zur Greiferoberfläche (8) angestellten Übernahmefläche (17) befindet.

7. Vorrichtung nach wenigstens einem der Ansprüche 1 bis 6, **dadurch gekennzeichnet, dass** zwischen Schlitten (2.1 - 2.4) und Greifer (6) ein Kraftspeicher (30) vorgesehen ist.

8. Vorrichtung nach wenigstens einem der Ansprüche 1 bis 7, **dadurch gekennzeichnet, dass** zwischen Schlitten (2.1 - 2:4) und Schiene (1) ein Linearantrieb (18) angeordnet ist.

9. Vorrichtung nach Anspruch 8, **dadurch gekennzeichnet, dass** sich der Linearantrieb (18) auf der Schiene (1) befindet.

10. Vorrichtung nach Anspruch 8 oder 9, **dadurch gekennzeichnet, dass** der Schlitten (2.1 - 2.3) mit einem Kastengehäuse (22) die Schiene (1) umgreift.

11. Vorrichtung nach wenigstens einem der Ansprüche 8 - 10, **dadurch gekennzeichnet, dass** die Schiene (1) querschnittlich als liegendes I ausgebildet ist.

12. Vorrichtung nach wenigstens einem der Ansprüche 8 - 11. **dadurch gekennzeichnet, dass** sich der Schlitten (2.1 - 2.3) beidseits neben dem Linearantrieb (18) auf Führungsschienen (23.1, 23.2) abstützt.

13. Vorrichtung nach wenigstens einem der Ansprüche 8 - 12, **dadurch gekennzeichnet, dass** auf der Schiene (1) Permanentmagnetstreifen (19) als Teil eines Stators und an dem Schlitten (2.1 - 2:3) Wicklungen (21) linear angeordnet sind, wobei zwischen den Permanentmagnetstreifen und den Wicklungen ein Luftspalt (20) besteht.

14. Vorrichtung nach wenigstens einem der Ansprüche 8 - 13, **dadurch gekennzeichnet, dass** dem Linearantrieb (18) ein zu diesem schräg verlaufender zweiter Linearantrieb (28) zugeordnet ist.

15. Verwendung einer Vorrichtung nach wenigstens einem der Ansprüche 1-14 zum Bearbeiten und/oder Handling von Formen beim Herstellen von Schokoladenartikel.

## Claims

1. A device for processing and/or handling objects (10), in particular moulds when producing chocolate articles, by means of a gripper (6) arranged on at least three arms (3.1 - 3.5) each movable, on two outer carriages (2.1, 2.3) and an inner carriage (2.2), along at least one rail (1), wherein an outer arm (3.1) on the outer carriage (2.1) intersects an inner arm (3.2) on the inner carriage (2.2), **characterised in that** the outer arm (3.1) intersecting the inner arm (3.2) forms a common articulation (7) with the other outer arm (3.3) on the gripper (6) or intersects the additional outer arm (3.3) and beyond the articulation (7) forms its own articulation (29) with the gripper (6).

2. A device according to claim 1, **characterised in that** the inner and an outer arm (3.2, 3.3) form a parallelogram and the outer arm (3.1) intersects this parallelogram.

3. A device according to claim 1 or 2, **characterised in that at** least one outer arm (3.4) and the inner arm (3.5) form an articulated connection (13) to one another, between the carriages (2.1, 2.2) and the gripper (6).

4. A device according to claim 3, **characterised in that** both arms (3.4, 3.5) are connected via a central articulation (13) to two arm strips (14.1, 14.2) separately coupled at their other end to the gripper (6).

5. A device according to at least one of claims 1 - 4, **characterised in that** at least two carriages (2.1 - 2.3) are movable along the same rail (1).

6. A device according to at least one of claims 1 - 5, **characterised in that** an attachment (16) with a transfer surface (17) positioned obliquely to the gripper surface (8) is located on the gripper (6).

7. A device according to at least one of claims 1 to 6, **characterised in that** an energy storing device (30) is provided between the carriage (2.1 - 2.4) and the gripper (6).

8. A device according to at least one of claims 1 to 7, **characterised in that** a linear drive (18) is arranged between the carriage (2.1 - 2.4) and the rail (1).

9. A device according to claim 8, **characterised in that** the linear drive (18) is located on the rail (1).

10. A device according to claim 8 or 9, **characterised in that** the carriage (2.1 - 2.3) embraces the rail (1) by means of a box-type housing (22).

11. A device according to at least one of claims 8 - 10, **characterised in that** the rail (1) is in the form of a horizontal I in cross-section.

12. A device according to at least one of claims 8 - 11, **characterised in that** on both sides, alongside the linear drive (18), the carriage (2.1 - 2.3) is supported on guide rails (23.1, 23.2).

13. A device according to at least one of claims 8 - 12, **characterised in that** permanent magnetic strips (19) are linearly arranged on the rail (1) as part of a stator and windings (21) are linearly arranged on the carriage (2.1 - 2.3), wherein there is an air gap (20) between the permanent magnetic strips and the windings.

14. A device according to at least one of claims 8 - 13, **characterised in that** a second linear drive (28) is associated with the linear drive (18), running obliquely to the latter.

15. Use of a device according to at least one of claims 1 - 14 for processing and/or handling moulds when producing chocolate articles.

## Revendications

1. Dispositif pour traiter et/ou manipuler des objets (10), en particulier des moules lors de la fabrication d'articles en chocolat, au moyen d'un préhenseur (6) qui est disposé sur au moins trois bras (3.1 à 3.5) qui sont déplaçables, chacun, sur deux coulisseaux extérieurs (2.1, 2.3) et un coulisseau intérieur (2.2) le long d'au moins un rail (1), un bras extérieur (3.1) sur le coulisseau extérieur (2.1) croisant un bras intérieur (3.2) sur le coulisseau intérieur (2.2),
**caractérisé par le fait**
**que** le bras extérieur (3.1) croisant le bras intérieur (3.2) forme une articulation commune (7) avec l'autre bras extérieur (3.3) au préhenseur (6) ou croise également l'autre bras extérieur (3.3) et forme, au-delà de l'articulation (7), une articulation propre (29) avec le préhenseur (6).

2. Dispositif selon la revendication 1, **caractérisé par le fait que** le bras intérieur et un bras extérieur (3.2, 3.3) forment un parallélogramme et que le bras extérieur (3.1) croise ce parallélogramme.

3. Dispositif selon la revendication 1 ou 2, **caractérisé par le fait qu'**au moins un bras extérieur et le bras intérieur (3.4, 3.5) établissent entre eux une connexion articulée (13) entre les coulisseaux (2.1, 2.2) et le préhenseur (6).

4. Dispositif selon la revendication 3, **caractérisé par le fait que** les deux bras (3.4. 3.5) sont connectés, par l'intermédiaire d'une articulation centrale (13), à deux bandes de bras (14.1, 14.2) qui sont couplées, à l'autre extrémité, séparément au préhenseur (6).

5. Dispositif selon au moins l'une des revendications 1 à 4, **caractérisé par le fait qu'**au moins deux coulisseaux (2.1 à 2:3) sont déplaçables le long du même rail (1).

6. Dispositif selon au moins l'une des revendications 1 à 5, **caractérisé par le fait que** sur le préhenseur (6) se trouve un épaulement (16) avec une face de reprise (17) placée obliquement par rapport à la surface du préhenseur (8).

7. Dispositif selon au moins l'une des revendications 1 à 6, **caractérisé par le fait qu'**entre les coulisseaux (2.1 à 2.4) et le préhenseur (6) est prévu un accumulateur de force (30).

8. Dispositif selon au moins l'une des revendications 1 à 7, **caractérisé par le fait qu'**entre les coulisseaux (2.1 à 2.4) et le rail (1) est disposé un entraînement linéaire (18).

9. Dispositif selon la revendication 8, **caractérisé par le fait que** l'entraînement linéaire (18) se trouve sur le rail (1).

10. Dispositif selon la revendication 8 ou 9, **caractérisé par le fait que** le coulisseau (2.1 à 2.3) vient en prise autour du rail (1) par un boîtier en forme de caisson (22).

11. Dispositif selon au moins l'une des revendications 8 à 10, **caractérisé par le fait que** le rail (1) est réalisé avec une section en forme de I horizontal.

12. Dispositif selon au moins l'une des revendications 8 à 11, **caractérisé par le fait que** le coulisseau (2.1 à 2.3) s'appuie de part et d'autre à côté de l'entraînement linéaire (18) sur des rails de guidage (23.1, 23.2).

13. Dispositif selon au moins l'une des revendications 8 à 12, **caractérisé par le fait que** sur le rail (1) sont disposées des bandes d'aimants permanents (19) comme partie d'un stator et que sur le coulisseau (2.1 à 2:3) sont disposés linéairement des enroulements (21), entre les bandes d'aimants permanents et les enroulements existant un entrefer (20).

14. Dispositif selon au moins l'une des revendications 8 à 13, **caractérisé par le fait qu'**à l'entraînement linéaire (18) est associé un deuxième entraînement linéaire (28) s'étendant obliquement par rapport à ce dernier.

15. Utilisation d'un dispositif selon au moins l'une des revendications 1 à 14 pour traiter et/ou manipuler des moules lors de la fabrication d'articles en chocolat.
